**Europäisches Patentamt**

**European Patent Office**

**Office européen des brevets**

(19)

(11) Veröffentlichungsnummer: **0 068 286**
**B1**

(12) # EUROPÄISCHE PATENTSCHRIFT

(45) Veröffentlichungstag der Patentschrift:
**16.10.85**

(51) Int. Cl.⁴: **H 04 N 5/32**

(21) Anmeldenummer: **82105238.8**

(22) Anmeldetag: **15.06.82**

(54) Medizinische Diagnostikeinrichtung.

(30) Priorität: **29.06.81 US 278479**
**29.06.81 US 278481**

(43) Veröffentlichungstag der Anmeldung:
**05.01.83 Patentblatt 83/1**

(45) Bekanntmachung des Hinweises auf die Patenterteilung:
**16.10.85 Patentblatt 85/42**

(84) Benannte Vertragsstaaten:
**DE FR GB**

(56) Entgegenhaltungen:
**US - A - 4 185 198**

**OPTICAL ENGINEERING, Band 17, Nr. 6, November/Dezember 1978, Seiten 652-657 . R.A.KRUGER et al .: "A digital video image processor for real-time X-ray subtraction imaging".**

(73) Patentinhaber: **Siemens Aktiengesellschaft, Berlin und München Wittelsbacherplatz 2, D-8000 München 2 (DE)**

(72) Erfinder: **Jazbbec, Ivan, 2218 Iroquois, Wilmette Illinois 60091 (US)**
Erfinder: **Anderson, William, 1335 Pine Street, Glenview Illinois 60025 (US)**

## Beschreibung

Die Erfindung betrifft eine medizinische Diagnostikeinrichtung gemäss dem Oberbegriff des Patentanspruches 1. Eine derartige Diagnostikeinrichtung dient zur Herstellung von Subtraktionsbildern, die bei Röntgendurchleuchtungen, insbesondere bei der selektiven Angiographie, Verwendung finden, um Blutgefässe, die im normalen Röntgenbild nur schwer zu erkennen sind und von Knochenstrukturen überlagert werden, deutlich sichtbar zu machen.

In der älteren deutschen Patentanmeldung DE-A1 3 122 098 ist eine Röntgendiagnostikeinrichtung zur Erstellung von Subtraktionsbildern beschrieben, bei der in einem Speicher ein über mehrere Abtastungen gemitteltes Leerbild, d.h. ein Bild ohne Kontrastmittelfüllung, gespeichert wird. Anschliessend wird ein Kontrastmittel injiziert. Die zugehörigen Füllungsbilder werden nun in einem weiteren Bildspeicher über mehrere Abtastungen gemittelt abgespeichert. In der Subtraktionsvorrichtung wird das Leerbild vom Füllungsbild subtrahiert, so dass auf einem nachgeschalteten Monitor anschliessend der Verlauf des Kontrastmittels beobachtet werden kann. Durch Drücken einer Taste wird ein optimales Füllungsbild in dem zweiten Speicher festgehalten. Die Aufnahme der Maske und des Füllungsbildes erfolgt manuell unter Sichtkontrolle auf dem Monitor.

Um ein optimales Subtraktionsbild zu erhalten, muss die Maske möglichst dicht vor dem Auftreten des Kontrastmittelflusses gesetzt werden, da andernfalls der Zeitabschnitt zwischen Maske und Füllungsbild zu gross wird, so dass Patientenbewegungen auftreten können und das Subtraktionsbild unbrauchbar würde. Bei der Aufnahme des Füllungsbildes ist zu beachten, dass bei der Betätigung der Taste die menschliche Verzögerungszeit eine optimale Einspeicherung erschwert.

In der genannten Patentanmeldung ist weiterhin ein Videorecorder als Massenbildspeicher vorgesehen, der eine Speicherung des vollständigen Ablaufes bewirkt. Dadurch wird viel Speicherplatz benötigt, der zur eigentlichen Untersuchung keinen Beitrag liefert.

Die Erfindung geht von der Aufgabe aus, eine Röntgendiagnostikeinrichtung der eingangs genannten Art zu schaffen, bei der eine automatische Speicherung der für die Untersuchung optimalen Bilder erfolgt.

Die Aufgabe wird erfindungsgemäss durch die in dem kennzeichnenden Teil des Patentanspruches 1 angegebenen Merkmale gelöst. Durch dieses Ausgangssignal kann die Einspeicherung einer Maske, eines Füllungsbildes oder auch der für die Untersuchung benötigten Aufnahmeszenen automatisch bewirkt werden.

Eine Patientenbewegung nach erfolgter Aufnahme einer Maske kann verhindert werden, wenn die Anordnung eine Schaltung enthält, die mit einem Speicher für eine Maske verbunden ist und eine Einspeicherung einer neuen Maske bewirkt. Die gesamte Füllungsphase lässt sich aufnehmen, wenn die Anordnung eine Startvorrichtung enthält, die an weiteren Speichern angeschlossen ist und die Speichervorgänge einleitet. Ein einfacher Aufbau der Verarbeitungsschaltung lässt sich erreichen, wenn der Detektor einen Komparator aufweist, der das Differenzsignal der Subtraktionsvorrichtung mit einem vorbestimmten Schwellenwert vergleicht und einen Ausgangsimpuls beim Überschreiten der Schwelle liefert, und wenn an dem Komparator ein Zähler für dessen Ausgangsimpulse angeschlossen ist. Die Unterscheidung einer Bewegung des Patienten und des Auftretens des Kontrastmittels lässt sich erkennen, wenn dem Zähler ein vorbestimmter Zählwert zugeführt wird, der mit dem aktuellen Zählerstand verglichen wird. Eine Unterscheidung wird auch erreicht, wenn eine Auswahlschaltung mit dem Zähler verbunden ist, die den Zählerstand mit einem vorbestimmten Zählwert vergleicht und beim Überschreiten des Zählwertes einen Ausgangsimpuls erzeugt.

Eine weitere vorteilhafte Variante der Verarbeitungsschaltung wird erreicht, wenn der Detektor eine Integrationsvorrichtung für das Differenzsignal aufweist, an der ein Komparator angeschlossen ist, dessen zweitem Eingang ein vorbestimmter Integrationswert zugeführt wird. Die Unterscheidung der Bewegung und des Kontrastmittelflusses erfolgt auf vorteilhafte Weise, wenn der vorbestimmte Integrationswert ein Teil eines vorbestimmten Fensters ist. Der Verlauf des Kontrastmittelflusses lässt sich auch nachträglich auswerten, wenn die weiteren Speicher eine Speicherkapazität für mehrere Bilder aufweisen. Die Diagnostikeinrichtung lässt sich auch in der Nuklearmedizin einsetzen, wenn die Strahlung eine von einem Tracer ausgehende nukleare Strahlung ist.

Die Erfindung ist nachfolgend anhand von in der Zeichnung dargestellten Ausführungsbeispielen näher erläutert. Es zeigen:

Fig. 1 ein Blockschaltbild einer Einrichtung für Röntgen- oder nukleare Diagnostik zur Erläuterung des Erfindungsgedankens,

Fig. 2 ein Blockschaltbild der Verarbeitungsschaltung gemäss Fig. 1,

Fig. 3 eine Darstellung von zwei Bildern zur Erläuterung der Funktionsweise der Subtraktionsvorrichtung gemäss Fig. 2,

Fig. 4 ein Diagramm zur Darstellung der Funktionsweise des in Fig. 2 dargestellten Komparators,

Fig. 5 eine Tabelle zur Erläuterung der Bedingungen der in Fig. 2 dargestellten Auswahlschaltung,

Fig. 6 ein Diagramm zur Erläuterung der Funktionsweise der Auswahlschaltung gemäss Fig. 2,

Fig. 7 ein Blockschaltbild der Verarbeitungsschaltung gemäss Fig. 2,

Fig. 8 und 9 Blockschaltbilder von modifizierten Teilen der Verarbeitungsschaltung gemäss Fig. 7,

Fig. 10 ein Blockschaltbild einer Variante der Verarbeitungsschaltung gemäss Fig. 1,

Fig. 11 ein Diagramm zur Darstellung der Funktionsweise des in Fig. 10 dargestellten Integrators,

Fig. 12 ein Bild auf dem Monitor gemäss Fig. 1 mit einem interessierenden Bereich,

Fig. 13 eine binäre Bilddarstellung zur Auswahl des in Fig. 12 dargestellten interessierenden Bereiches und

Fig. 14 ein Blockschaltbild einer Generatorschaltung für den interessierenden Bereich der Verarbeitungsschaltung gemäss Fig. 2.

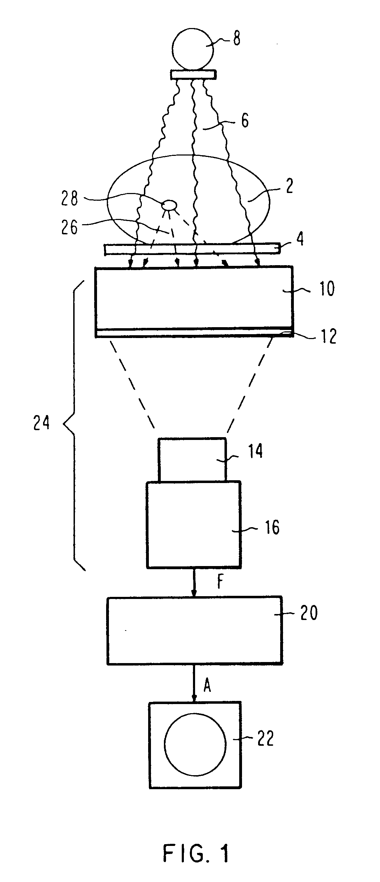

In der Fig. 1 ist eine Diagnostikeinrichtung mit einer Röntgenröhre 8 dargestellt, die Röntgenstrahlen 6 aussendet, die einen Patienten 2 und eine Patientenliege 4 durchdringen und auf den Eingangsleuchtschirm eines Bildverstärkers 10 ein Strahlenbild werfen. Das Bild des Ausgangsleuchtschirmes 12 des Bildverstärkers 10 wird durch eine Optik 14 von einer Fernsehkamera 16 aufgenommen. Die Fernsehkamera 16 erzeugt ein dem Strahlenbild entsprechendes Videosignal F. Das Videosignal F wird einer Verarbeitungsschaltung 20 zugeführt. Das Ausgangssignal A dieser Verarbeitungsschaltung 20 wird einem Monitor 22 zugeführt und auf seinem Leuchtschirm wiedergegeben.

Die Diagnostikeinrichtung lässt sich auch in der Nuklearmedizin verwenden, wenn anstelle der Röntgenröhre 8 ein Tracer oder eine bestimmte Dosis von Radionukliden dem Patienten 2 zugeführt wird, so dass ein Organ 28 des Patienten nukleare Strahlen 26, entweder Beta- oder Gammastrahlen, aussendet. Hierbei wird die Röntgenbildverstärker-Fernsehkette 24 durch einen Detektor 10 ersetzt, der die nuklearen Strahlen 26 empfängt und in elektrische Videosignale umsetzt. Ein derartiger Detektor kann eine Angerkamera sein.

Der Tracer, der die nuklearen Strahlen 26 aussendet, wird dem Patienten 2 zugeführt. Der Flussverlauf des Tracers durch bestimmte Organe, beispielsweise dem Herzen des Patienten, wird durch die nuklearmedizinische Bildgebung dargestellt.

Die Arbeitsweise der Diagnostikeinrichtung wird im weiteren anhand einer Röntgenanlage erläutert. Dem Patienten 2 wird ein Kontrastmittel zugeführt, dessen Verlauf auf dem Monitorbild dargestellt werden soll.

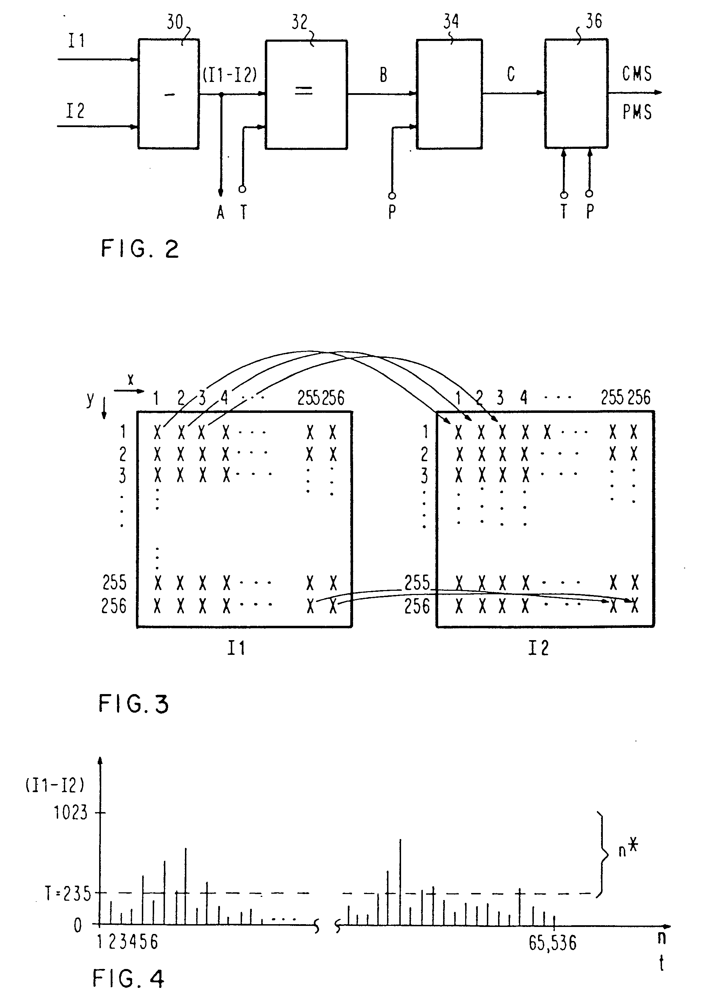

In der Fig. 2 ist der Aufbau der Verarbeitungsschaltung 20 der Fig. 1 dargestellt, die eine Subtraktionsvorrichtung 30 für die Subtraktion von Bildpunkten zweier Videosignale, einen an dem Ausgang der Subtraktionsvorrichtung 30 angeschlossenen Komparator 32, einen dem Komparator 32 nachgeschalteten Zähler 34 und eine in Reihe geschaltete Auswahlschaltung 36 aufweist.

Der Subtraktionsvorrichtung 30 wird ein erstes Videosignal I1 und ein zweites Videosignal I2 zugeführt. Das erste Videosignal I1 ist ein Referenz-Videosignal, das als vollständiges Bildsignal einer aufgenommenen und gespeicherten Maske entspricht. Das zweite Videosignal I2 ist das aktuelle Videosignal F der Fernsehkamera 16. Dieses zweite Videosignal I2 kann aber auch einer aufgenommenen Szene entstammen, wenn, wie noch später erläutert wird, die medizinische Diagnostikeinrichtung im Wiedergabebetrieb arbeitet.

Ein vollständiges Videosignal wird beispielsweise von $256 \times 256 = 65\,536$ Bildpunkten gebildet. Jeder dieser Bildpunkte kann beispielsweise einen Wert von $1024 = 2^{10}$ Intensitätsstufen annehmen, das einer Aufteilung des Intensitätsbereiches zwischen Dunkel (0) und Hell (1023) in 10 bits mit einem Bereich von 0 bis 1023 entspricht.

Die Subtraktionsvorrichtung 30 subtrahiert bildpunktweise das Referenz-Videosignal I1 von dem aktuellen Videosignal I2. Diese Subtraktion ist schematisch in Fig. 3 dargestellt. Die Werte der Bildpunkte, die die x- und y-Koordinaten (255, 256) des Referenz-Videosignales I1 aufweisen, werden beispielsweise von den Werten der entsprechenden Bildpunkte mit den gleichen Koordinaten (255, 256) des aktuellen Videosignales I2 subtrahiert. Das Ausgangssignal A der Subtraktionsvorrichtung 30 wird dem Monitor 22 zugeführt.

Falls das aktuelle Videosignal I2 und das Referenz-Videosignal I1 gleich sind, weist das Ausgangssignal A der Subtraktionsvorrichtung 30 für alle Bildpunkte (ausgenommen beim Rauschen) den Wert Null auf. Eine Änderung zwischen dem Referenz-Videosignal I1 und dem zweiten Videosignal I2 kann zwei Gründe haben:

a) Der Patient 2 hat sich bewegt, oder
b) ein Kontrastmittel ist durch die Körperteile des unbewegten Patienten 2 geflossen, die von der Fernsehkamera 16 erfasst werden.

Ein solches Kontrastmittel wird einem Patienten zwischen dem ersten und einem folgenden Bild mit der Absicht injiziert, eine Ader, z.B. eine Vene, sichtbar zu machen. In einigen Fällen liegt eine relativ lange Zeit zwischen den Bildern. Um ein optimales Subtraktionsbild zu erhalten, muss festgestellt werden, ob eine Änderung zwischen dem Referenz-Videosignal I1 und einem der folgenden zweiten Videosignale I2 stattgefunden hat und welche Ursache eine solche Änderung aufweist.

Der Komparator 32, der Zähler 34 und die Auswahlschaltung 36 in der Verarbeitungsschaltung der Fig. 2 erkennen eine Patientenbewegung oder einen Kontrastmittelfluss.

Der Komparator 32 ist ein Schwellendetektor. Er weist eine Schwelle T auf, welche entweder manuell oder durch eine automatische Startschaltung gesetzt wird. Zur Erläuterung eines Beispieles wird angenommen, dass die Schwelle T = 235 beträgt. Gemäss Fig. 4 vergleicht der Komparator 32 das Differenzsignal (I1–I2) von jedem der Bildpunkte mit der vorbestimmten Schwelle T. Jedesmal wenn die Schwelle T durch das Differenzsignal (I1–I2) überschritten wird, liefert der Komparator 32 einen Zählimpuls B als Ausgangssignal an den Zähler 34, dessen Zählerstand mit jedem Zählimpuls B um eins erhöht wird. In der Fig. 4 ist das Differenzsignal (I1–I2) für 256×256 = 65 536 Bildpunkte dargestellt. Die Abszisse zeigt die Bildpunktnummern n und die Zeit t. In der Fig. 4 ist angenommen, dass in einem vollständigen Bild n* = 109 Bildpunkte einen grösseren Wert als die Schwelle T = 235 aufweisen. Das bedeutet, dass der Komparator 32 insgesamt 109 Zählimpulse B dem Zähler 34 liefert. Der Zähler 34 enthält keine Informationen, wie gross die Differenz der Bildpunkte im Hinblick auf die Schwelle T ist.

Dem Zähler 34 wird ein vorbestimmter Zählwert P zugeführt. Dieser vorbestimmte Zählwert P ist entweder eingestellt oder kann durch den Operator der medizinischen Diagnostikeinrichtung frei gewählt werden.

In dem in Fig. 4 dargestellten Beispiel sind n* = 109 Bildpunkte grösser als die Schwelle T. Verglichen mit einem Fall, wo keiner der Bildpunkte einen Wert oberhalb der Schwelle T aufweist, d.h. der Patient 2 hat sich zwischen der Aufnahme des ersten und des zweiten Bildes nicht bewegt und dem Patienten ist kein Kontrastmittel oder Tracer injiziert worden, bildet dies eine charakteristische Kontraständerung. Da die n* = 109 Bildpunkte eine relativ kleine Anzahl repräsentieren, muss angenommen werden, dass ihre Ursache auf die Einführung eines Kontrastmittels zurückzuführen ist. Eine Bewegung des Patienten 2 würde eine grössere Anzahl n* von Bildpunkten bewirken, die die Schwelle T überschreiten.

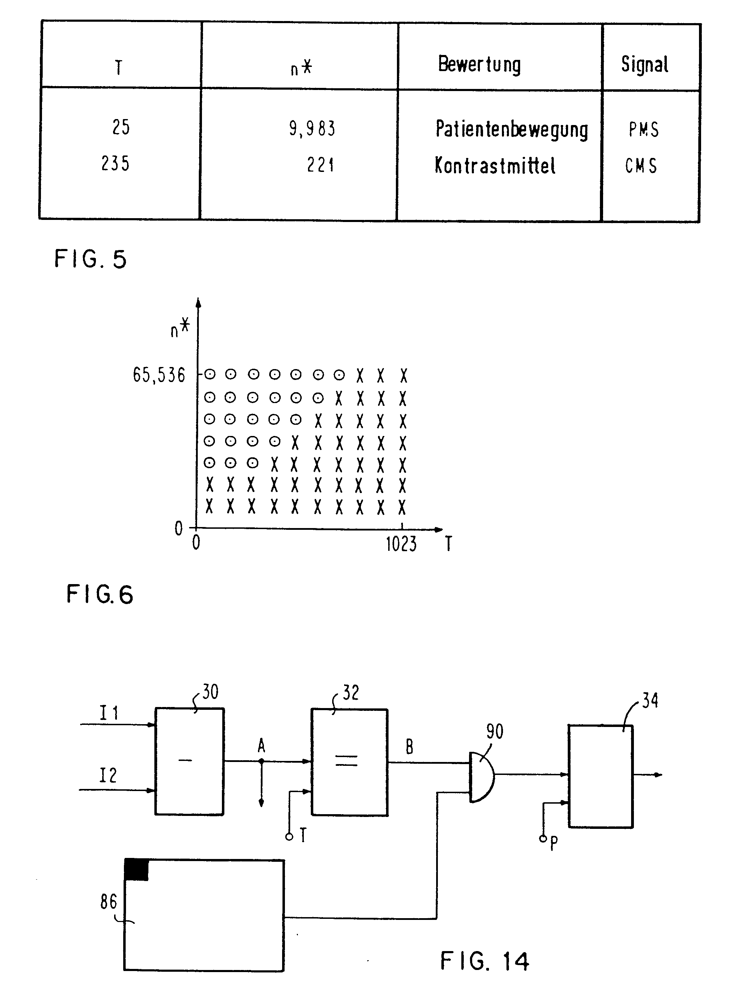

In der Tabelle der Fig. 5 ist dieser Zusammenhang schematisch dargestellt. Hier wird zuerst angenommen, dass die Schwelle T relativ klein ist, beispielsweise T = 25, und dass die Anzahl n* der Bildpunkte, die die Schwelle T überschreitet, gross ist (n* = 9983). In diesem Falle hat ein beträchtlicher Teil des gesamten Bildes, nämlich 9983 von 65 536 Bildpunkten, seine Intensität geändert. Dies ist während einer Bewegung des Patienten 2 erfolgt.

Die in der Tabelle der Fig. 5 dargestellten Ergebnisse können folgendermassen zusammengefasst werden:

Wird eine vergleichsweise kleine Schwelle T von einer grossen Anzahl n* von Bildpunkten überschritten, muss angenommen werden, dass eine Bewegung des Patienten 2 zwischen der Aufnahme des Referenz-Videosignales I1 und des zweiten Videosignales I2 erfolgt ist. In diesem Falle sendet die Auswahlschaltung 36 ein Patientenbewegungssignal PMS (Bewegungsdetektion) aus. Liegt im anderen Fall nur eine geringe Anzahl n* (z.B. 221) von Bildpunkten über einer vergleichsweise hohen Schwelle T, z.B. 235, dann muss angenommen werden, dass eine Helligkeitsänderung der einzelnen Bildpunkte zwischen dem ersten und dem zweiten Bild aufgetreten ist, die durch das Auftreten eines Objektes in dem Strahlengang hervorgerufen wird. Dies kann durch Einführung einer Injektionsnadel oder durch Injektion eines Kontrastmittels in eine Ader des Patienten 2 erfolgen. In diesem Fall erzeugt die Auswahlschaltung 36 ein Kontrastmittelsignal CMS.

Zur Detektion erhält die Auswahlschaltung 36 gemäss Fig. 2 als Eingangssignal die Zählerrate C am Ende eines jeden Bildes. Um eine korrekte Analyse zu erstellen, werden der Auswahlschaltung 36 auch der Wert der Schwelle T und der Zählwert P zugeführt. Die Auswahlschaltung 36 kann beispielsweise einen Mikroprozessor aufweisen.

Da nach Auftreten einer Bewegung des Patienten 2 die gespeicherte Maske unbrauchbar geworden ist, steuert das Patientenbewegungssignal PMS eine Aufnahme einer neuen Maske, eines neuen Referenzbildes. Das Kontrastmittelsignal CMS am Ausgang der Auswahlschaltung 36 löst einen automatischen Aufnahmestart, beispielsweise eines Massenbildspeichers, aus.

Die zur Analyse der Anzahl n* benötigten Daten, insbesondere die Werte T und P, hängen beispielsweise von den Gegebenheiten der medizinischen Diagnostikeinrichtung, von der Flussrate des angewendeten Kontrastmittels oder Tracers und von den geprüften Organen ab. Diese Daten müssen experimentell ermittelt werden.

Die Auswahlschaltung 36 kann Speichermittel enthalten, in denen eine Datenmatrix gespeichert ist, die aus den experimentellen Ergebnissen ermittelt wurde. In der Fig. 6 ist eine derartige Datenmatrix als Tabelle mit der Schwelle T als Abszisse und der Anzahl n* als Ordinate dargestellt. Sterne markieren den Bereich, in dem eine Änderung der Helligkeit durch das Auftreten des Kontrastmittels bewirkt wird. Kleine Kreise kennzeichnen den Bereich, in welchem eine Änderung der Helligkeit durch eine Bewegung des Patienten hervorgerufen wird.

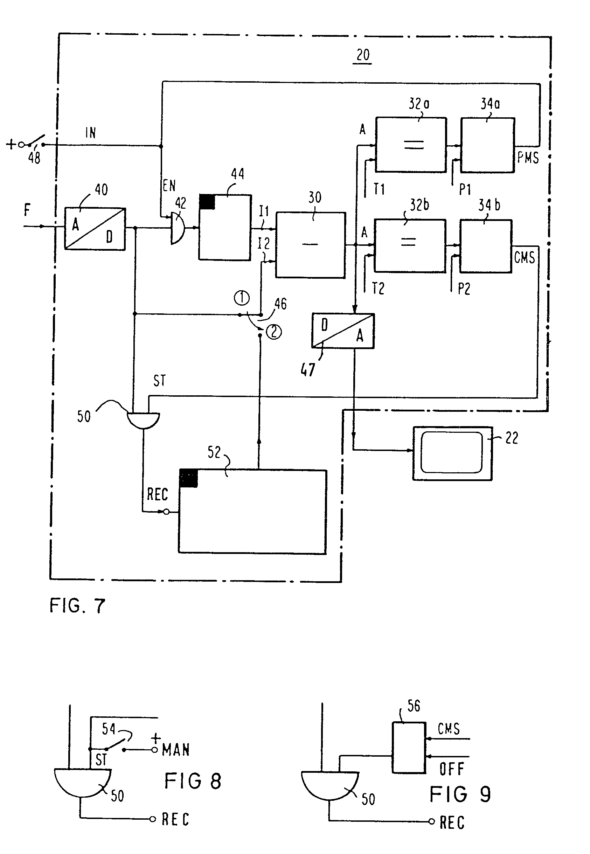

In der Fig. 7 ist die Verarbeitungsschaltung 20 dargestellt. Einem Analog/Digital-Wandler (A/D-Wandler 40) wird das Videosignal F von der Fernsehkamera 16 zugeführt. Das digitalisierte Videosignal F ist über ein erstes UND-Glied 42 auf einen Bildspeicher 44 geführt, der als Einzelbildspeicher ausgebildet ist. An dem zweiten Eingang des UND-Gliedes 42 liegt ein Freigabesignal EN, das eine Aufnahme einer Maske in dem Bildspeicher 44 bewirkt. Der Ausgang des Bildspeichers 44 ist mit einem ersten Eingang der Subtraktionsvorrichtung 30 verbunden, an deren zweiten Eingang der Ausgang des A/D-Wandlers 40 über einen Umschalter 46 angeschlossen ist. In der dargestellten Position (1) des Umschalters 46 wird das aktuelle Videosignal I2 direkt der Subtraktionsvorrichtung 30 zugeführt.

Das Ausgangssignal A der Subtraktionsvorrichtung 30 wird einem Digital-Analog-Wandler (D/A-Wandler 47) zugeführt, der mit dem Monitor 22 verbunden ist.

Das Ausgangssignal A wird weiterhin einer ersten Reihenschaltung eines ersten Komparators 32a und eines ersten Zählers 34a zugeführt. Dem ersten Komparator 32a wird eine erste Schwelle T1 und dem ersten Zähler 34a ein erster Zählwert P1 zugeführt. Die erste Reihenschaltung 32a, 34a wird für die Bewegungsdetektion benötigt. Die Werte von T1 und P1 sind derart ausgewählt, dass der erste Zähler 34a als Ausgangssignal ein Patientenbewegungssignal PMS erzeugt, wenn eine Helligkeitsänderung auf eine Bewegung des Patienten 2 zurückzuführen ist. Das Patientenbewegungssignal PMS wird als Freigabesignal EN dem UND-Glied 42 für die Einspeicherung eines Bildes in den Bildspeicher 44 zugeführt. Wenn der Bewegungsdetektor (Komparator 32a und Zähler 34a) eine Bewegung des Patienten 2 zwischen den Zeitpunkten der Aufnahme des ersten Bildes, der Maske, und eines folgenden Bildes erkannt hat, wird in dem Bildspeicher 44 das nächste vom A/D-Wandler 40 kommende Bild gespeichert und das frühere gespeicherte Bild überschrieben. Dadurch wird das Referenz-Videosignal I1 (die Maske) automatisch durch ein neues ersetzt.

An dem zweiten Eingang des UND-Gliedes 42 ist weiterhin ein Schalter 48 angeschlossen, der die Spannungsquelle + mit dem ersten UND-Glied 42 verbindet. Durch die Betätigung des Schalters 48 wird ein Referenz-Videosignal I1 in den Bildspeicher 44 eingelesen.

In der in Fig. 7 dargestellten Verarbeitungsschaltung 20 wird das Ausgangssignal A der Subtraktionsvorrichtung weiterhin einer Reihenschaltung eines zweiten Komparators 32b und eines zweiten Zählers 34b zugeführt. Dem zweiten Komparator 32b wird eine zweite Schwelle T2 und dem zweiten Zähler 34b ein zweiter Zählwert P2 zugeführt. Die Werte T2 und P2 weichen von den entsprechenden Werten T1 und P1 ab. Die Werte T1, P1 und T2, P2 können manuell gesetzt oder automatisch angepasst werden.

Wenn das Kontrastmittel in einem der Maske folgenden Bild erscheint, erzeugt die zweite Reihenschaltung 32b, 34b ein Signal CMS, das als Startsignal ST einem zweiten UND-Glied 50 zugeführt wird. Der zweite Eingang des zweiten UND-Gliedes 50 ist an dem Ausgang des A/D-Wandlers 40 angeschlossen. Der Ausgang des UND-Gliedes 50 ist mit dem Aufnahmeeingang REC eines Massenbildspeichers 52 verbunden. Dadurch wird erreicht, dass eine Aufnahme von Bildern in dem Massenbildspeicher 52 erst erfolgt, wenn das Kontrastmittel oder der Tracer in dem untersuchten Strahlenbild auftritt, so dass die Speicherkapazität des Massenbildspeichers 52 optimal ausgenutzt wird.

Der Massenbildspeicher 52 sollte eine grosse Speicherkapazität aufweisen, wenn beispielsweise bei Herzuntersuchungen hohe Bildraten benötigt werden. Falls eine hohe Bildrate oder der automatische Start nicht gewünscht wird, kann ein Schalter 54 (Fig. 8) an dem ersten Eingang des zweiten UND-Gliedes 50 angeschlossen sein, der das UND-Glied 50 mit der Spannungsquelle + verbindet. Dadurch wird ein manuelles Startsignal ST erzeugt. Hierbei muss jedoch die menschliche Reaktionszeit zwischen dem Erkennen des Auftretens des Kontrastmittels bis zum Drücken des Schalters 54 berücksichtigt werden.

Der Umschalter 46 kann durch einen Operator oder durch eine nicht dargestellte Steuereinheit geschaltet werden. In der dargestellten Position (1) bildet die Subtraktionsvorrichtung 30 die Differenz aus dem gespeicherten Referenz-Videosignal I1 und dem aktuellen Videosignal I2. In der anderen Position (2) verbindet der Umschalter 46 den Ausgang des Massenbildspeichers 52 mit dem zweiten Eingang der Subtraktionsvorrichtung 30. Dadurch wird die Diagnostikeinrichtung auf Wiedergabe umgeschaltet. Die Subtraktionsvorrichtung 30 subtrahiert die in dem Massenbildspeicher 52 gespeicherten Videosignale von dem Referenz-Videosignal I1.

In dem Massenbildspeicher 52 kann anstelle des aktuellen Videosignales I2 das Differenzsignal (I1–I2) der Subtraktionsvorrichtung 30 gespeichert werden.

In der Fig. 9 ist das zweite UND-Glied 50 dargestellt, an dessen ersten Eingang ein Flip-Flop 56 angeschlossen ist. Das Flip-Flop 56 wird durch das Signal CMS gesetzt. Durch ein OFF-Signal, das durch eine nicht dargestellte Steuereinheit erzeugt wird, kann das Flip-Flop 56 rückgesetzt werden. Dieses OFF-Signal kann nach einer vorgegebenen Anzahl von Bildern, die in dem Massenbildspeicher 52 gespeichert werden sollen, oder wenn die gesamte Speicherkapazität des Massenbildspeichers 52 erschöpft ist, erzeugt werden.

Die in Fig. 7 dargestellte Verarbeitungsschaltung 20 wird nun anhand einer Untersuchung des Herzens näher erläutert. Es wird angenommen, dass ein Kontrastmittel dem Patienten injiziert wurde und dass dieses Kontrastmittel das rechte Ventrikel des Herzens erreicht hat. Dann wird das Startsignal ST erzeugt und dem zweiten UND-Glied 50 zugeführt, so dass der Aufnahmeeingang REC des Massenbildspeichers 52 freigegeben und automatisch die Aufnahme der folgenden Bilder in dem Massenbildspeicher 52 bewirkt wird. Wenn das Kontrastmittel das Bildfeld verlässt und einen Lungenflügel erreicht, wird das Kontrastmittelsignal CMS zu null, so dass das zweite UND-Glied 50 sperrt. Dadurch wird Speicherkapazität in dem Massenbildspeicher 52 eingespart. Die Aufnahme in dem Massenbildspeicher 52 wird wieder durch das Startsignal ST eingeschaltet, wenn das Kontrastmittel nun von der Lunge aus in dem Bildfeld erscheint, um in das linke Ventrikel des Herzens zu dringen. Die Aufnahme kann nun fortgesetzt werden, bis die Speicherkapazität erschöpft ist oder das Kontrastmittel das Bildfeld wieder verlässt.

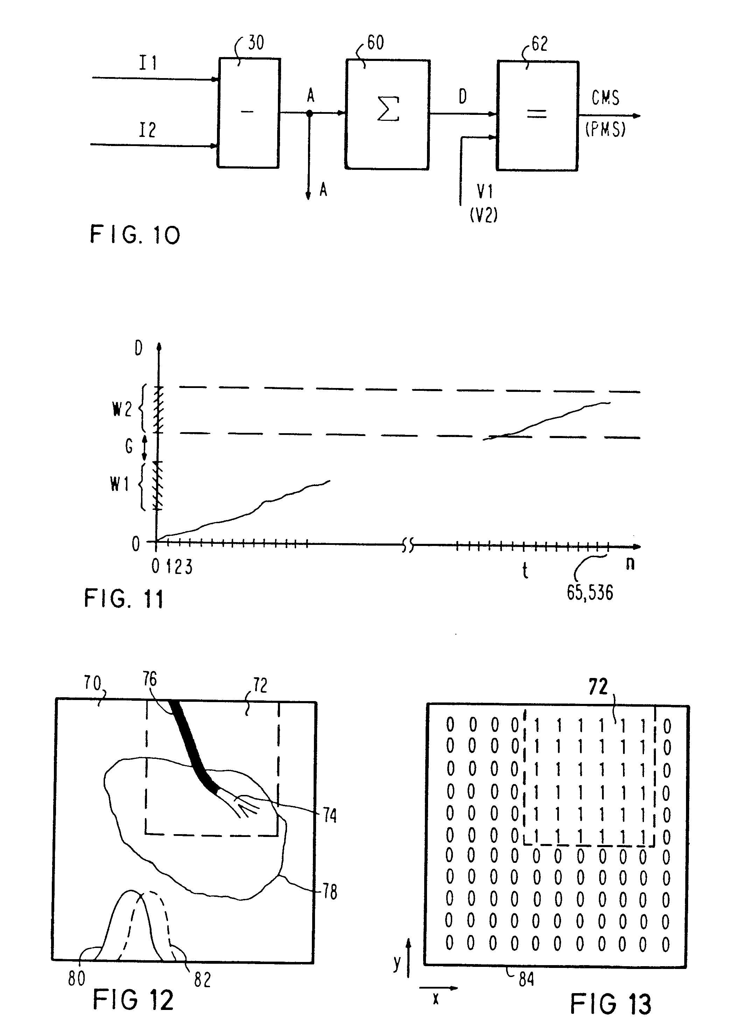

In Fig. 10 ist eine Variante der Verarbeitungsschaltung 20 dargestellt. Auch hier ist die Subtraktionsvorrichtung 30 vorgesehen, die, wie bereits beschrieben, bildpunktweise eine Subtraktion (Fig. 3) des Referenz-Videosignales I1 von dem aktuellen Videosignal I2 durchführt. Das Ausgangssignal A der Subtraktionsvorrichtung 30 wird einem Integrator 60 zugeführt. Dieser Integrator 60 addiert die Differenzwerte der Bildpunkte. In der Fig. 11 ist die in dem Integrator 60 enthaltene augenblickliche Summe D als eine Funktion der Bildpunktnummern n oder der Zeit t dargestellt. Das Ausgangssignal D des Integrators 60 wird nach Ablauf eines Bildes einem Komparator 62 zugeführt.

In der Fig. 11 sind zwei Fenster W1 und W2 eingezeichnet. Fällt das Ausgangssignal D des Integrators 60 in das obere Fenster W2, so hat eine Bewegung des Patienten 2 stattgefunden. Fällt dagegen das Ausgangssignal D in das untere Fenster W1, dann wurde ein Kontrastmittel dem Patienten injiziert, das in dem Bildfeld erschienen ist.

Da ein Rauschen ebenfalls in dem Integrator 60 addiert wird, liegt das erste Fenster W1 um einen festen Betrag über dem Null-Level 0. Die zwei Fenster W1 und W2 können nebeneinander liegen oder, um Fehler bei der Erkennung auszuschliessen, durch einen Abstand G getrennt sein. Die Grösse und Lage der Fenster W1 und W2 werden experimentell ermittelt.

Um die Fenster W1 und W2 zu kennzeichnen, wird dem Komparator 62 der Fig. 10 ein Eingangssignal V1 oder V2 zugeführt. Wenn das Ausgangssignal D am Ende eines Bildes innerhalb des ersten Fensters W1 liegt, erzeugt der Komparator 62 ein Kontrastmittelsignal CMS. Liegt dagegen das Ausgangssignal D innerhalb des höheren Fensters W2, erzeugt der Komparator 62 ein Patientenbewegungssignal PMS.

In den Fig. 12 bis 14 sind ein Verfahren und eine Vorrichtung dargestellt, um einen bestimmten interessierenden Bereich auszuwählen. In der Fig. 12 ist ein auf dem Monitor 22 wiedergegebenes Bild 70 dargestellt, das einen für die Prüfung des Patienten 2 besonders interessierenden Bereich 72 aufweist. Dieser Bereich 72 kann beispielsweise eine Ader 74 enthalten, durch die ein Kontrastmittel 76 in ein zu untersuchendes Organ 78 eindringt, das beispielsweise das Herz des Patienten sein kann.

Wird zur Auswertung nur der Bereich 72 verwendet, erhöht sich die Erkennbarkeit eines Kontrastmittelflusses. In dem Bild 70 ist ein Knochen 80 des Patienten 2 dargestellt. Bewegt sich der Patient 2, wird der Knochen 80 in einer geringfügig verschobenen Stelle als Knochenbild 82 wiedergegeben. Die Bewegung des Knochens erzeugt eine vergleichsweise grosse Differenz in dem Ausgangssignal A der Subtraktionsvorrichtung 30. Durch die der Subtraktionsvorrichtung 30 folgenden Schaltungen kann diese Differenz fälschlicherweise als Einführung eines Kontrastmittels oder Tracers analysiert werden sodass ein Kontrastmittelsignal CMS erzeugt wird. Liegt der interessierende Bereich 72 ausserhalb des Knochens 80 und seines bewegten Knochenbildes 82, wird ein falsches Kontrastmittelsignal CMS eliminiert.

In Fig. 13 ist eine Matrix dargestellt, die eine Ausblendung von für die Verarbeitung bildunwesentlichen Teilen entsprechend einer Maske 84 bewirkt. Die Matrix kennzeichnet den interessierenden Bereich 72, der durch ein Feld von logischen Einsen dargestellt wird, wobei der übrige, bildunwesentliche Bereich durch logische Nullen gekennzeichnet ist. Diese Daten der Matrix werden in einen in Fig. 14 dargestellten Maskenspeicher 86 eingelesen. Der interessierende Bereich 72 ist durch die Zuordnung von «1» und «0» zu den verwendeten Koordinaten x, y frei wählbar. Der Ausgang des Maskenspeichers 86 ist mit einem dritten UND-Glied 90 verbunden, das zwischen dem Komparator 32 und dem Zähler 34 geschaltet ist. Dadurch kann bildpunktweise bestimmt werden, welche Bildpunkte zur Auswertung einen Beitrag liefern sollen. Es werden nur die Bildpunkte in dem Zähler 34 gezählt, die in dem Bereich 72 und oberhalb der Schwelle T liegen. Das UND-Glied 90 kann auch in Reihe zwischen der Subtraktionsvorrichtung 30 und dem Komparator 32 angeordnet sein.

Ein solcher Maskenspeicher 86 beinhaltet einen Adressendiskriminator zur Bestimmung der unteren und der oberen Koordinaten (x, y) des interessierenden Bereiches 72. Dadurch kann ein rechtwinkliger Bereich durch eine untere und eine obere x- und durch eine untere und eine obere y-Koordinate gekennzeichnet werden. Jedoch kann der Bereich 72 auch unregelmässig sein.

Zur Kennzeichnung des Bereiches 72 kann auf dem Leuchtschirm mit Hilfe eines Leuchtgriffels dessen Umriss markiert werden, wobei die entsprechenden Koordinatendaten in den Maskenspeicher 86 automatisch eingelesen werden. Die Impulse des Leuchtgriffels kennzeichnen dabei die Adressen des Umfanges des interessierenden Bereiches 72, die dann in den Maskenspeicher 86 eingelesen werden.

**Patentansprüche**

1. Medizinische Diagnostikeinrichtung mit einer Strahlenquelle (68), mit einem Strahlendetektor (10, 12), mit einer Fernsehaufnahmevorrichtung (14, 16), mit einer Verarbeitungsschaltung (20), die wenigstens einen Speicher (44, 52), in dem ein Videosignal eines ersten Bildes speicherbar ist, und eine Subtraktionsvorrichtung (30) aufweist, die ein Differenzsignal aus einem zu einem früheren Zeitpunkt gespeicherten und einem später auftretenden Videosignal bildet, und mit einem Monitor (22), dadurch gekennzeichnet, dass die Verarbeitungsschaltung (20) einen Detektor (32, 34) aufweist, der an der Subtraktionsvorrichtung (30) angeschlossen ist und wenigstens ein Ausgangssignal beim Auftreten von Änderungen der Helligkeit der Bildpunkte erzeugt, und dass das Ausgangssignal einer Anordnung (42, 50) zugeführt wird, die eine Einspeicherung bewirkt.

2. Diagnostikeinrichtung nach Anspruch 1, dadurch gekennzeichnet, dass die Anordnung (42, 50) eine Schaltung (42) enthält, die mit einem Speicher (44) für eine Maske verbunden ist und eine Einspeicherung einer neuen Maske bewirkt.

3. Diagnostikeinrichtung nach Anspruch 1 oder 2, dadurch gekennzeichnet, dass die Anordnung eine Startvorrichtung (50) enthält, die an weiteren Speichern (52) angeschlossen ist und die Speichervorgänge einleitet.

4. Diagnostikeinrichtung nach einem der Ansprüche 1 bis 3, dadurch gekennzeichnet, dass der Detektor (32, 34) einen Komparator (32) aufweist, der das Differenzsignal der Subtraktionsvorrichtung (30) mit einem vorbestimmten Schwellenwert vergleicht und einen Ausgangsimpuls beim Überschreiten der Schwelle liefert, und dass an dem Komparator (32) ein Zähler (34) für dessen Ausgangsimpulse angeschlossen ist.

5. Diagnostikeinrichtung nach Anspruch 4, dadurch gekennzeichnet, dass dem Zähler (34) ein vorbestimmter Zählwert (P) zugeführt wird, der mit dem aktuellen Zählerstand verglichen wird.

6. Diagnostikeinrichtung nach Anspruch 4, dadurch gekennzeichnet, dass eine Auswahlschaltung (36) mit dem Zähler (34) verbunden ist, die den Zählerstand mit einem vorbestimmten Zählwert (P) vergleicht und beim Überschreiten des Zählwertes einen Ausgangsimpuls erzeugt.

7. Diagnostikeinrichtung nach einem der Ansprüche 1 bis 3, dadurch gekennzeichnet, dass der Detektor eine Integrationsvorrichtung (60) für das Differenzsignal (I1–I2) aufweist, an der ein Komparator (62) angeschlossen ist, dessen zweitem Eingang ein vorbestimmter Integrationswert (V) zugeführt wird.

8. Diagnostikeinrichtung nach Anspruch 7, dadurch gekennzeichnet, dass der vorbestimmte Integrationswert (V) ein Teil eines vorbestimmten Fensters (W) ist.

9. Diagnostikeinrichtung nach einem der Ansprüche 3 bis 8, dadurch gekennzeichnet, dass die weiteren Speicher (52) eine Speicherkapazität für mehrere Bilder aufweisen.

10. Diagnostikeinrichtung nach einem der Ansprüche 1 bis 9, dadurch gekennzeichnet, dass die Strahlen von einem Tracer ausgehende nukleare Strahlen (26) sind.

## Claims

1. Medical diagnostic apparatus having a radiation source (8), a radiation detector (10, 12), a television camera device (14, 16), a processing circuit (20) which has at least one store (44, 52) in which a video-signal of a first image can be stored, and a subtraction unit (30) which forms a difference signal from a video-signal stored at an earlier time and a video-signal which occurs at a later time, and having a monitor (22), characterised in that the processing circuit (20) has a detector (32, 34) connected to the subtraction unit (30) producing at least one output signal on the occurrence of changes in the brightness of the image points, and that the output signal is fed to an input of an arrangement (42, 50) by which it is stored.

2. Diagnostic apparatus as claimed in Claim 1, characterised in that the apparatus (42, 50) contains a circuit (42) connected to a store (44) for a mask and which effects the input-storage of a new mask.

3. Diagnostic apparatus as claimed in Claim 1 or 2, characterised in that the arrangement contains a start device (50) connected to further stores (52) initiating the storage procedures.

4. Diagnostic apparatus as claimed in one of Claims 1 to 3, characterised in that the detector (32, 34) has a comparator (32) which compares the difference signal of the subtraction device (30) with a predetermined threshold value and supplies an output pulse when the threshold is overshot, and that the comparator (32) is connected to a counter (34) for the output pulses thereof.

5. Diagnostic apparatus as claimed in Claim 4, characterised in that the counter (34) is supplied with a predetermined counting value (P) which is compared with the current count.

6. Diagnostic apparatus as claimed in Claim 4, characterised in that a selector circuit (36) connected to the counter (34) compares the count with a predetermined counting value (P), and produces an output pulse when the counting value is overshot.

7. Diagnostic apparatus as claimed in one of Claims 1 to 3, characterised in that the detector has an integration device (60) for the difference signal (I1–I2) connected to a comparator (62) whose second input is supplied with a predetermined integration value (V).

8. Diagnostic apparatus as claimed in Claim 7, characterised in that the predetermined integration value (V) forms part of a predetermined window (W).

9. Diagnostic apparatus as claimed in one of Claims 3 to 8, characterised in that the further stores (52) possess a storage capacity for a plurality of images.

10. Diagnostic apparatus as claimed in one of Claims 1 to 9, characterised in that the rays are nuclear rays (26) emanating from a tracer.

## Revendications

1. Appareil de diagnostic médical comportant une source de rayonnement (8), un détecteur de rayonnement (10, 12), un dispositif (14, 16) de prise de vues de télévision, un circuit de traitement (20), qui comporte au moins une mémoire (47, 52), dans laquelle un signal vidéo d'une première image peut être mémorisé, un dispositif soustracteur (3) qui forme un signal constitué par la différence entre un signal vidéo mémorisé à un instant antérieur et un signal vidéo mémorisé ultérieurement, et comportant un moniteur (22), caractérisé par le fait que le circuit de traitement (20) comporte un détecteur (32, 34) qui est raccordé au dispositif soustracteur (30) et produit au moins un signal de sortie lors de l'apparition de modifications de la luminosité des points d'image, et que le signal de sortie est envoyé à un dispositif (42, 50) qui réalise la mémorisation.

2. Appareil de diagnostic selon la revendication 1, caractérisé par le fait que le dispositif (42, 50) contient un circuit (42) qui est relié à une mémoire (44) pour un masque et réalise une mémorisation d'un nouveau masque.

3. Appareil de diagnostic suivant la revendication 1 ou 2, caractérisé par le fait que l'agencement contient un dispositif de démarrage (50) qui est raccordé à d'autres mémoires (52) et déclenche les processus de mémorisation.

4. Appareil de diagnostic suivant l'une des revendications 1 à 3, caractérisé par le fait que le détecteur (32, 34) comporte un comparateur (32) qui compare le signal de différence fourni par le dispositif soustracteur (30) à une valeur de seuil prédéterminée, et délivre une impulsion de sortie lors du dépassement du seuil, et qu'au comparateur (42) se trouve raccordé un compteur (34) comptant les impulsions de sortie du comparateur.

5. Appareil de diagnostic suivant la revendication 4, caractérisé par le fait qu'au compteur (34) est envoyée une valeur de comptage prédéterminée (P) qui est comparée à l'état effectif de comptage.

6. Appareil de diagnostic suivant la revendication 4, caractérisé par le fait qu'au compteur (34) est relié un circuit de sélection (36) qui compare l'état de comptage à une valeur de comptage prédéterminée (P) et produit une impulsion de sortie, lors du dépassement de la valeur du compteur.

7. Appareil de diagnostic suivant l'une des revendications 1 à 3, caractérisé par le fait que le détecteur comporte un dispositif (60) d'intégration pour le signal de différence (I1–I2), auquel est raccordé un comparateur (62), à la seconde entrée duquel est envoyée une valeur d'intégration prédéterminée (V).

8. Appareil de diagnostic suivant la revendication 7, caractérisé par le fait que la valeur d'intégration prédéterminée (V) se situe dans un créneau prédéterminé (W).

9. Appareil de diagnostic suivant l'une des revendications 3 à 8, caractérisé par le fait que les autres mémoires (52) possèdent une capacité de mémoire pour plusieurs images.

10. Appareil de diagnostic suivant l'une des revendications 1 à 9, caractérisé par le fait que le rayonnement est produit par un rayonnement nucléaire (26) issu d'un traceur.

FIG. 1

FIG. 2

FIG. 3

FIG. 4

| T | n∗ | Bewertung | Signal |
|---|---|---|---|
| 25 | 9,983 | Patientenbewegung | PMS |
| 235 | 221 | Kontrastmittel | CMS |

FIG. 5

FIG.6

FIG. 14

FIG. 7

FIG 8

FIG 9

FIG. 10

FIG. 11

FIG 12

FIG 13